# EUROPÄISCHE PATENTSCHRIFT

(11) **EP 1 647 179 B1**
(45) Veröffentlichungstag und Bekanntmachung des Hinweises auf die Patenterteilung: **26.09.2007**
(21) Anmeldenummer: 05109420.9
(22) Anmeldetag: 11.10.2005
(51) Int. Cl.: A01F 12/40

(54) **Rotor für einen Strohhäcksler**
Rotor for a straw chopper
Rotor pour une hache à paille

(30) Priorität: 14.10.2004 DE 102004049965
(43) Veröffentlichungstag der Anmeldung: 19.04.2006
(73) Patentinhaber: DEERE & COMPANY, Moline, Illinois 61265-8098 (US)
(72) Erfinder: Priesnitz, Rico, 66822, Lebach (DE)
(74) Vertreter: Holst, Sönke

(56) Entgegenhaltungen:
- DE-A1- 3 631 485
- DE-A1- 3 925 701
- FR-A- 2 479 646
- US-A- 5 482 508

## Beschreibung

Die Erfindung betrifft einen Rotor für einen Strohhäcksler, mit einem Rotorkörper, einer am Rotorkörper angeordneten Konsole, wenigstens einem an der Konsole mit einem Befestigungselement abnehmbar und pendelnd aufgehängten Messer und mit einem durch das Befestigungselement pendelnd und abnehmbar mit der Konsole verbundenen Luftschaufelelement.

Strohhäcksler an Mähdreschern werden derzeit in der Regel mit einem Rotor mit pendelnd aufgehängten Messern bestückt. Die Messer rotieren mit hoher Geschwindigkeit und treten in Zwischenräume ein, die durch feststehende Gegenmesser definiert werden. Das geförderte und gehäckselte Material, bei dem es sich um Stroh oder Spreu oder ein Gemisch daraus handeln kann, wird durch die rotierenden Messer nach dem Schnitt aus dem Gehäuse des Strohhäckslers gefördert. Es trifft dann auf stromab des Strohhäckslers angeordnete Leitbleche, die das Material in seitlicher Richtung ablenken, damit es über einen möglichst hohen Anteil der Schnittbreite des Mähdreschers verteilt wird.

Mähdrescher werden derzeit mit immer größeren Schnittbreiten ausgestattet, die es immer schwieriger machen, mit einem derartigen Häckslerrotor das Material über die Schnittbreite des Mähdreschers zu verteilen.

Es wurden einige Vorschläge gemacht, durch Erzeugung eines Luftstroms die Wurfweite zu vergrößern, indem man die eigentlichen Messer mit Flächen zur Erzeugung eines Luftstroms versieht, der das Häckselmaterial mitfördert. Im Einzelnen wurden starr am Rotor befestigte Messer mit rückseitigen, sich in Achsrichtung des Rotors erstreckenden Platten (US 3 103 241 A), pendelnd aufgehängte Messer mit derartigen Platten (US 3 717 062 A, US 5 232 405 A, US 5 482 508 A), in sich tordierte, pendelnde Messer (US 6 511 374 B), sich in Achsrichtung des Rotors erstreckende und dort starr befestigte, plattenförmige Messer (DE 197 49 338 A) sowie pendelnd aufgehängte U-förmige Messer mit einem sich in Achsrichtung des Rotors erstreckenden Schenkel (DE 101 07 776 A) vorgeschlagen. Ein Nachteil der Messer mit daran befestigten bzw. integrierten Luftschaufelflächen (US 3 103 241 A, US 3 717 062 A, US 5 232 405 A, US 5 482 508 A und DE 101 07 776 A) liegt darin, dass sie sich nicht umdrehen lassen, nachdem ihre Schneidkanten abgenutzt sind, weil dann die zum Luftschaufeln dienenden Flächen an die vorlaufende Seite kommen, was zu einem nicht zufrieden stellenden Schneidverhalten führt. Die Messer nach US 6 511 374 B sind aufwändig in der Herstellung und die nach DE 197 49 338 A erfordern einen hohen Antriebsleistungsbedarf. Es wäre demnach wünschenswert, die bekannten, flachen Messer beizubehalten und andere Flächen zur Bereitstellung eines Luftstroms zu verwenden.

Weiterhin wurden Strohhäcksler mit relativ breit bauenden Halterungen für die Häckslermesser versehen (US 3 717 062 A, US 6 692 351 B). Diese mögen eine gewisse Luftschaufelwirkung entfalten, sie sind jedoch mit dem Rotor verschweißt und im Schadensfall nur schwierig austauschbar. Außerdem können sie nicht demontiert werden, falls für besondere Anwendungsfälle nur eine geringe Reichweite des Strohhäckslers gewünscht wird.

Die DE 39 25 701 A beschreibt einen Strohhäcksler, bei dem im Abstandsraum zwischen benachbarten Häckselmessern ein sich in Achsrichtung der Häckslerwelle erstreckendes Luftschaufelblech an seinen beiden Enden jeweils drehbar an einem mit der Häckslerwelle fest verbundenen Halter gelagert ist. Die pendelnde Lagerung erlaubt es, eine Strohleitklappe beim Schwadablagebetrieb in eine Position zu verbringen, in der der Häcksler abgedeckt ist. Soll das Luftschaufelblech demontiert werden, sind daher jeweils zwei Schrauben zu lösen und anschließend zu befestigen, was sich bei der hohen Zahl an Luftschaufelelementen eines Strohhäckslers insgesamt als relativ aufwändig erweist. Außerdem können die Luftschaufelbleche im Verschleißfall nicht umgedreht werden, da sie nicht zur Achse der Häckslerwelle symmetrisch sind. Da sich die Luftschaufelbleche über den ganzen Zwischenraum zwischen benachbarten Haltern erstrecken, fördern sie relativ viel Luft, was einen hohen Energiebedarf mit sich bringt. Diese Luftschaufelbleche haben sich in der Praxis nicht durchgesetzt.

Die der Erfindung zu Grunde liegende Aufgabe wird darin gesehen, einen Häckslerrotor bereitzustellen, der durch geeignete Luftschaufelelemente bei angemessenem Energiebedarf eine befriedigende Reichweite des Häckselgutes ermöglicht und bei dem die Luftschaufelelemente bei Bedarf leicht austauschbar oder entfernbar sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Rotor eines Strohhäckslers umfasst einen zylindrischen Rotorkörper, der im Betrieb um seine Längsachse in Drehung versetzt wird. Auf dem Rotorkörper sind eine Anzahl an Konsolen angeordnet, die zur Befestigung von pendelnd gelagerten, an sich bekannten Messern dienen. Die Messer sind an ihren vorlaufenden und in der Regel auch an den nachlaufenden Stirnseiten mit Schneidkanten versehen und laufen vorzugsweise zwischen stationären Gegenmessern hindurch, um das Häckselmaterial zu zerkleinern. Die Messer sind durch Befestigungselemente lösbar an der Konsole befestigt. Die Befestigungselemente dienen auch zur lösbaren und pendelnden Fixierung eines Luftschaufelelements an der Konsole. Es wird vorgeschlagen, das Luftschaufelelement nur durch ein einziges Befestigungselement am Rotorkörper zu befestigen, nämlich das Befestigungselement, das auch das Messer an der Konsole hält.

Auf diese Weise erreicht man eine gute Luftförderung und eine hohe Reichweite des Strohhäckslers, da das Luftschaufelelement einen zusätzlichen Luftstrom erzeugt. Es kann, da es nur durch ein einziges Befestigungselement am Rotorkörper befestigt ist, einfach und schnell demontiert werden, falls man es nicht benötigt, bzw. im Verschleißfall ausgetauscht werden. Die pendelnde Anbringung des Luftschaufelelements hat den Vorteil, dass es bei Fremdkörpereinwirkung ausweichen kann.

Da die Luftschaufelelemente nur einseitig befestigt werden, können sie sich über nur einen Teil des Abstands zwischen zwei benachbarten Konsolen erstrecken, was den Energiebedarf des Strohhäckslers in Grenzen hält.

Das Luftschaufelelement weist in einer Ausführungsform einen ersten Schenkel auf, mit dem das Befestigungselement zusammenwirkt. Der erste Schenkel erstreckt sich demnach orthogonal zur Achse des Rotorkörpers. Ein zweiter Schenkel des Luftschaufelelements schließt sich an den ersten Schenkel an und bildet mit ihm einen rechten Winkel. Der zweite, zur Luftförderung dienende Schenkel erstreckt sich somit in Achsrichtung des Rotorkörpers und in seiner Betriebsstellung näherungsweise radial zur Drehachse des Rotorkörpers.

Das Luftschaufelelement kann sich auf die beschriebenen zwei Schenkel beschränken und demnach einen L-förmigen Querschnitt aufweisen. Bei vielen Anwendungsfällen ist es sinnvoll, an beiden Seiten einer Konsole ein Luftschaufelelement anzubringen. Um möglichst wenig unterschiedliche Teile herstellen und lagern zu müssen, erweist es sich als angebracht, das Luftschaufelelement achsensymmetrisch zu gestalten. Ein Luftschaufelelement kann somit um 180° gedreht und auf der jeweils anderen Seite der Konsole befestigt werden. Im Verschleißfall können die vornehmlich an der vorlaufenden Fläche abnutzenden Luftschaufelelemente auf beiden Seiten der Konsole untereinander ausgetauscht werden. Ein geeigneter Querschnitt ist demnach U-förmig, wobei der erste (mittlere) Schenkel mit dem Befestigungselement zusammenwirkt und der zweite und dritte Schenkel jeweils an gegenüberliegenden Kanten des ersten Schenkels angebracht sind.

Abhängig von der gewünschten Luftschaufelwirkung können alle Konsolen eines Rotors mit erfindungsgemäßen Luftschaufelelementen ausgestattet werden, oder nur ein Teil von ihnen. Sind die Konsolen in mehreren Reihen angeordnet, könnte nur ein Teil der Reihen mit den Luftschaufelelementen ausgestattet werden. Es kann sich auch als sinnvoll erweisen, nur äußere Konsolen mit Luftschaufelelementen zu versehen, da das dort geförderte Material besonders weit zur Seite auszuwerfen ist, während die inneren Konsolen keine Luftschaufelelemente benötigen, da das dort auszuwerfende Material nicht weit zur Seite gefördert werden soll. Dadurch kann Energie zum Antrieb des Rotors eingespart werden.

In den Zeichnungen ist ein nachfolgend näher beschriebenes Ausführungsbeispiel der Erfindung dargestellt. Es zeigt:
- Fig. 1: einen Mähdrescher mit einem Strohhäcksler;
- Fig. 2: eine perspektivische Ansicht eines Teilbereichs des Rotors des Strohhäckslers mit einer Konsole und daran befestigten Messern und Luftschaufelelementen, und
- Fig. 3: eine perspektivische Explosionszeichnung der Befestigung der Luftschaufelelemente und der Messer an einer Konsole des Rotors des Strohhäckslers.

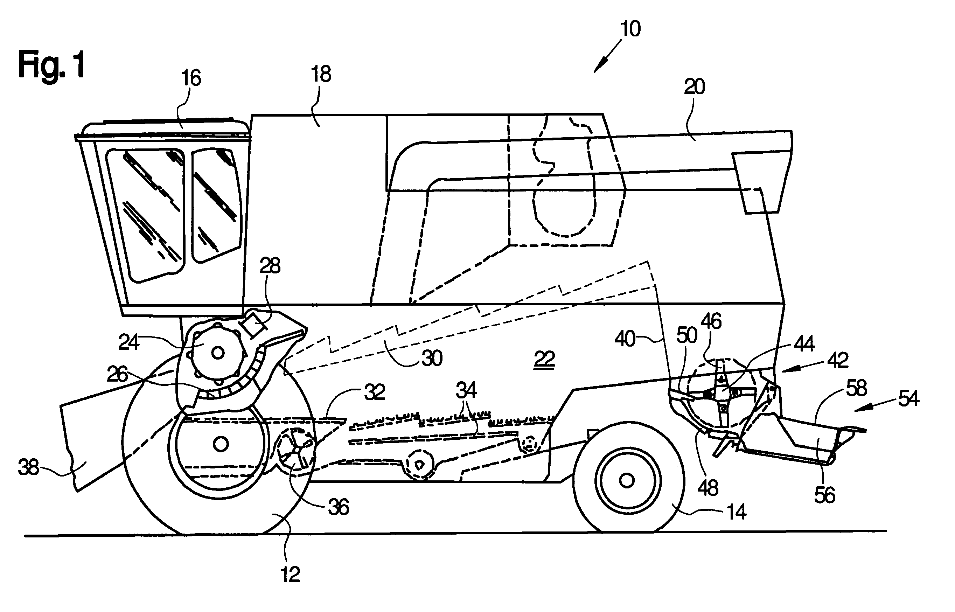

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 über ein Strohleitblech 40 einem Strohhäcksler 42 zugeführt werden und leichte Bestandteile mittels eines Gebläses 36 von den Sieben 34 ebenfalls auf den Boden oder in den Einlass des Strohhäckslers 42 geblasen oder durch einen separaten Förderer dorthin verbracht werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Der Strohhäcksler 42 setzt sich aus einem Gehäuse 48 und einem darin angeordneten Rotor zusammen, der einen hohlzylindrischen Rotorkörper 44 und um seinen Umfang und über seine Länge verteilte, pendelnd aufgehängte Messer 46 umfasst. Der Rotorkörper 44 ist mit einem Antrieb derart verbunden, dass er in dem Gehäuse 48 um eine etwa horizontale, quer zur Fahrtrichtung verlaufende Achse rotiert, in der Figur 1 im Gegenuhrzeigersinn. Im Zusammenwirken mit Gegenmessern 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Strohleitbleche 56 umfasst, welche unterhalb einer Strohverteilerhaube 58 angeordnet sind.

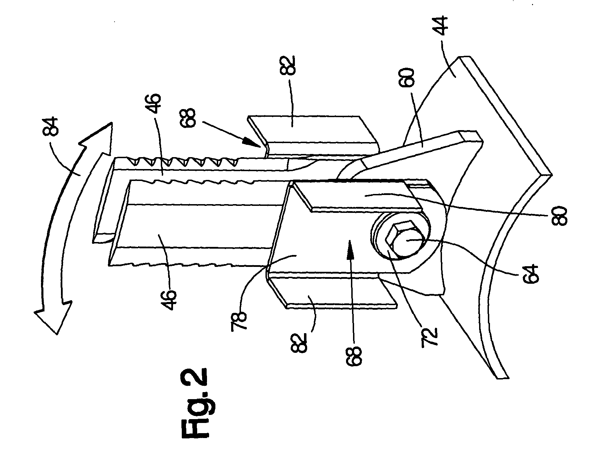

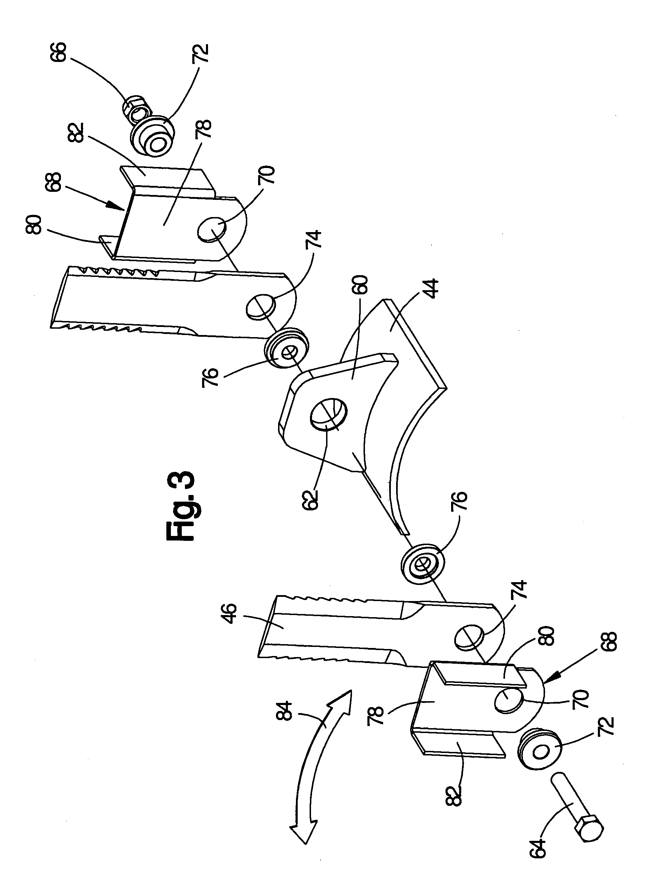

Die Figur 2 zeigt einen Abschnitt des Rotors mit dem Rotorkörper 44 und den daran angebrachten Messern 46 in perspektivischer Darstellung. Auf den Rotorkörper 44 sind mehrere sich jeweils in Achsrichtung des Rotorkörpers 44 erstreckende Reihen an Konsolen 60 aufgeschweißt, von denen in der Figur 2 nur eine dargestellt ist und die mit sich in Achsrichtung des Rotorkörpers 44 erstreckenden Bohrungen 62 versehen sind (s. Figur 3). Durch jede der Bohrungen 62 erstreckt sich jeweils ein Befestigungselement 64 in Form einer Schraube, die durch eine Mutter 66 gesichert ist.

Das Befestigungselement 64 dient bei den Konsolen 60 z. B. jeder zweiten Reihe oder aller Reihen auch zur Befestigung von Luftschaufelelementen 68 auf beiden Seiten der Konsolen 60, indem es sich durch entsprechende Löcher 70 in den Luftschaufelelementen 68 erstreckt.

Die Luftschaufelelemente 68 weisen einen U-förmigen Querschnitt auf und haben somit drei Schenkel 78, 80 und 82. Das Loch 70 befindet sich im mittleren Schenkel 78, so dass der zweite Schenkel 80 und der dritte Schenkel 82 sich jeweils in Achsrichtung des Rotorkörpers 44 erstrecken. Der erste Schenkel 78 ist länger als der zweite und dritte Schenkel 80, 82. Ihre in radialer Richtung des Rotorkörpers 44 betrachtet äußeren Enden liegen jedoch in einer Ebene. In Achsrichtung des Rotorkörpers 44 betrachtet entspricht die Länge der zweiten und dritten Schenkel 80, 82 etwa der Hälfte der in Drehrichtung gemessenen Breite der Messer 46. Die Schenkel 80, 82 erstrecken sich demnach nur über einen Teil des Abstands zwischen zwei in einer Reihe benachbarten Konsolen 60, was den Energiebedarf des Strohhäckslers 42 in Grenzen hält. Die Luftschaufelelemente 68 können einteilig aus Metall hergestellt werden, indem sie zunächst ausgestanzt und dann die Schenkel 80, 82 umgebogen werden. Alternativ werden sie aus Kunststoff hergestellt, insbesondere im Spritzgussverfahren.

Der dem Rotorkörper 44 benachbarte Bereich des ersten Schenkels 78 ist konvex abgerundet, so dass das Luftschaufelelement 68 in Richtung des Pfeils 84 frei um das Befestigungselement 64 drehen kann. Die dargestellte Position nehmen die Luftschaufelelemente 68 und die Messer 46 beim Betrieb aufgrund der Fliehkraft ein. Die Luftschaufelelemente 68 auf beiden Seiten der Konsole 60 sind zur Längsachse des Rotorkörpers 44 symmetrisch und untereinander identisch, so dass nur ein Typ an Luftschaufelelementen 68 herzustellen ist und sie untereinander ausgetauscht werden können.

Die Länge der Luftschaufelelemente 68 ist geringer als die der Messer 46, so dass letztere zwischen den Gegenmessern 50 eintauchen können. Die Luftschaufelelemente 68 wirken daher auch kaum mit dem Häckselmaterial zusammen, sondern fördern im Wesentlichen nur Luft.

Die Befestigung der Luftschaufelelemente 68 und der Messer 46 erfolgt, wie bereits erwähnt und in der Figur 3 dargestellt, durch Befestigungselemente 64 in Form einer Schraube, die sich jeweils durch eine erste Buchse 72, ein Loch 70 in einem Luftschaufelelement 68, ein Loch 74 im Messer 46, eine zweite Buchse 76, die Bohrung 62 in der Konsole 60, eine weitere zweite Buchse 76, ein Loch 74 in einem zweiten Messer 46, ein Loch 70 in einem weiteren Luftschaufelelement 68, eine weitere erste Buchse 72, und schließlich die Mutter 66 erstreckt. Die Buchsen 72 erstrecken sich jeweils durch das Loch 74 im Messer 46 und das Loch 70 im Luftschaufelelement 68, wobei ein hinreichendes Spiel zur pendelnden Lagerung des Messers 46 und zur davon unabhängigen pendelnden Lagerung des Luftschaufelelements 68 verbleibt. Die Buchsen 76 erstrecken sich in die Bohrung 62 hinein. Sämtliche in Figur 3 dargestellten Elemente, mit Ausnahme der Luftschaufelelemente 68, werden bei bereits hergestellten Strohhäckslern eingesetzt; lediglich das Befestigungselement 64 und die sich in die Löcher 70 und 74 erstreckenden Teile der ersten Buchsen 72 sind um einige mm länger. Deshalb können die Luftschaufelelemente 68 bei bereits vorhandenen Mähdreschern 10 problemlos nachgerüstet werden.

## Patentansprüche

1. Rotor für einen Strohhäcksler (42), mit einem Rotorkörper (44), einer am Rotorkörper (44) angeordneten Konsole (60), wenigstens einem an der Konsole (60) mit einem Befestigungselement (64) abnehmbar und pendelnd aufgehängten Messer (46) und mit einem durch das Befestigungselement (64) pendelnd und abnehmbar mit der Konsole (60) verbundenen Luftschaufelelement (68), **dadurch gekennzeichnet, dass** das Luftschaufelelement (68) nur durch ein einziges Befestigungselement (64) mit dem Rotorkörper (44) verbunden ist.

2. Rotor nach Anspruch 1, **dadurch gekennzeichnet, dass** sich das Luftschaufelelement (68) nur über einen Teil des Abstands zwischen zwei benachbarten Konsolen (60) erstreckt.

3. Rotor nach Anspruch 1 oder 2, **dadurch gekennzeichnet, dass** das Luftschaufelelement (68) einen ersten, mit dem Befestigungselement (64) zusammenwirkenden, sich orthogonal zur Drehachse des Rotorkörpers (44) erstreckenden Schenkel (78) und einen zweiten, sich in Achsrichtung des Rotorkörpers (44) erstreckenden Schenkel (80) aufweist, der an einer Kante des ersten Schenkels (78) anschließt.

4. Rotor nach Anspruch 3, **dadurch gekennzeichnet, dass** das Luftschaufelelement (68) einen dritten Schenkel (82) aufweist, der sich parallel zum zweiten Schenkel (80) erstreckt und an der dem zweiten Schenkel (80) gegenüber liegenden Kante des ersten Schenkels (78) angebracht ist, so dass das Luftschaufelelement (68) achsensymmetrisch ist und zwei an beiden Seiten der Konsole (60) angeordnete Luftschaufelelemente (68) untereinander austauschbar sind.

5. Rotor nach einem der Ansprüche 1 bis 4, **dadurch gekennzeichnet, dass** er mit mehreren Konsolen (60) ausgestattet ist, von denen nur ein Teil mit einem Luftschaufelelement (68) versehen ist.

6. Mähdrescher mit einem Strohhäcksler (42), der einen Rotor nach einem der vorhergehenden Ansprüche aufweist.

## Claims

1. Rotor for a straw chopper (42), comprising a rotor body (44), a bracket (60) disposed on the rotor body (44), at least one blade (46), which is suspended from the bracket (60) in a removable and pendulous manner with a fastening element (64), and comprising an air vane element (68) connected to the bracket (60) by the fastening element (64) in a pendulous and removable manner, **characterized in that** the air vane element (68) is connected to the rotor body (44) only by a single fastening element (64).

2. Rotor according to Claim 1, **characterized in that** the air vane element (68) extends only over a part of the distance between two adjacent brackets (60).

3. Rotor according to Claim 1 or 2, **characterized in that** the air vane element (68) has a first branch (78), which cooperates with the fastening element (64) and extends orthogonally to the rotational axis of the rotor body (44), and a second branch (80), which extends in the axial direction of the rotor body (44) and adjoins an edge of the first branch (78).

4. Rotor according to Claim 3, **characterized in that** the air vane element (68) has a third branch (82), which extends parallel to the second branch (80) and is attached to that edge of the first branch (78) which is situated opposite the second branch (80), so that the air vane element (68) is axially symmetrical and two air vane elements (68) disposed on both sides of the bracket (60) are mutually exchangeable.

5. Rotor according to one of Claims 1 to 4, **characterized in that** it is equipped with a plurality of brackets (60), only a part of which is provided with an air vane element (68).

6. Combine harvester comprising a straw chopper (42) which has a rotor according to one of the preceding claims.

## Revendications

1. Rotor pour un hache-paille (42), comportant un corps de rotor (44), une console (60) montée sur le corps de rotor (44), au moins une lame de coupe (46), suspendue à la console (60) de manière oscillante et amovible au moyen d'un élément de fixation (64), et comportant une pale de circulation d'air (68) assemblée à la console de manière oscillante et amovible au moyen de l'élément de fixation (64), **caractérisé en ce que** la pale de circulation d'air (68) est assemblée au corps du rotor (44) par un seul élément de fixation (64).

2. Rotor selon la revendication 1, **caractérisé en ce que** la pale de circulation d'air (68) ne s'étend que sur une partie de la distance entre deux consoles (60) adjacentes.

3. Rotor selon la revendication 1 ou 2, **caractérisé en ce que** la pale de circulation d'air (68) comporte une première branche (78), coopérant avec l'élément de fixation (64) et orientée orthogonalement à l'axe de rotation du corps de rotor (44), et une deuxième branche (80), qui s'étend dans le sens axial du corps de rotor (44) et qui est accolée à un bord de la première branche (78).

4. Rotor selon la revendication 3, **caractérisé en ce que** la pale de circulation d'air (68) comporte une troisième branche (82), qui est orientée parallèlement à la deuxième branche (80) et est attachée au bord de la première branche (78), opposé à la deuxième branche (80), de telle sorte que la pale de circulation d'air (68) est symétrique par rapport à l'axe et deux pales de circulation d'air (68), montées sur les deux côtés de la console (60), sont permutables.

5. Rotor selon l'une quelconque des revendications 1 à 4, **caractérisé en ce qu'**il est muni de plusieurs consoles (60), dont seule une partie est munie d'une pale de circulation d'air (68).

6. Moissonneuse-batteuse avec un hache-paille (42), qui comporte un rotor selon l'une quelconque des revendications précédentes.
